# EUROPEAN PATENT APPLICATION

(11) **EP 3 159 816 A1**
(43) Date of publication of application: **26.04.2017**
(21) Application number: 14896824.1
(22) Date of filing: 18.11.2014
(51) Int. Cl.: G06F 17/50

(54) **METHOD AND DEVICE FOR CHIP INTEGRATION AND STORAGE MEDIUM**

(30) Priority: 30.06.2014 CN 201410309541
(71) Applicant: Sanechips Technology Co., Ltd., Shenzhen, Guangdong 518055 (CN)
(72) Inventor: ZHANG, Qing, Shenzhen Guangdong 518055 (CN); GAO, Chongxing, Shenzhen Guangdong 518055 (CN)
(74) Representative: Gevers Patents
(86) International application number: PCT/CN2014/091416
(87) International publication number: WO 2016/000388

(57) **Abstract**

A method for chip integration is disclosed. The method includes: inputting the parameter file information of a parameter file required to be searched; obtaining a sub-module port list according to the input parameter file information; carrying out the connection between module ports and / or sub-module ports according to the obtained sub-module port list and a pre-configured netlist; and generating a top level file according to the connection between the module ports and / or the sub-module ports, so as to realize the chip integration. A device for chip integration and a storage medium are disclosed as well.

## Description

### TECHNICAL FIELD

The disclosure relates to the chip processing technology, and in particular to a method and device for chip integration, and a storage medium.

### BACKGROUND

With the booming development of communication industry, as the core technology of the development of communication industry, the design of System-on-Chip (SoC) becomes particularly important; the design of SoC needs to consider the performance, power consumption, area and design cycle of a chip. In the design of SoC, the integration of Register Transfer Level (RTL) codes, especially the integration of top level codes, has an important influence on the above factors; for example, in cases when there are many chip modules, the chip modules are frequently modified for many times, there are many teams participating in the design of SoC and the design cycle is short, the integration of top level codes may have a decisive influence on the design of SoC.

At present, in the traditional design of SoC, a few experienced designers participate in the integration of top level codes, and connect different chip modules manually by communicating with the designer of each chip module; in this way, on one hand, the process takes a lot of time, which prolongs the design cycle of SoC and diminishes the market value of chip; on the other hand, each design organization of SoC has a particular integration specification, for example, different design orgazaitons may have different specifications regarding interfaces, naming styles and module partitions; although there are commercial tools for assisting chip integration, it is difficult to meet the differentiated demands of specific applications, and the actual usage efficiency of the commercial tools is low.

### SUMMARY

In view of the above, the disclosure is intended to provide a method and device for chip integration, and a storage medium, which can implement fast integration of SoC, shorten the design cycle of SoC, reduce the production cost of SoC, and improve the usage efficiency.

The technical solutions of the disclosure are implemented as follows.

A method for chip integration is provided, which includes: parameter file information of a parameter file required to be searched is input; a submodule port list is obtained according to the input parameter file information; connection between module ports and/or submodule ports is performed according to the obtained submodule port list and a preconfigured connection table; and a top level file is generated according to the connection between the module ports and/or the submodule ports, so as to implement the chip integration

In an embodiment, the step that the submodule port list is obtained according to the input parameter file information includes that: according to a parameter file name and a parameter file directory in the parameter file information, the required parameter file is searched in a preconfigured and stored configuration file, and a submodule code is extracted from the searched parameter file, so as to obtain the submodule port list.

In an embodiment, the step that the connection between the module ports and/or the submodule ports is performed according to the obtained submodule port list and the preconfigured connection table includes that: a module port list is obtained from the preconfigured connection table, and the connection between the module ports, the connection between the submodule ports and the connection between the module ports and the submodule ports are performed according to the obtained module port list and the obtained submodule port list.

In an embodiment, the module port list includes: input/output types and bit widths of the module ports; the submodule port list includes: input/output types and bit widths of the submodule ports.

In an embodiment, if the bit widths of the module ports and/or the bit widths of the submodule ports do not match, when the connection between the module ports and/or the submodule ports is performed, only low data bits are connected, and high data bits are connected to zero;
if the bit widths of the module ports and/or the bit widths of the submodule ports match, the module ports and/or the submodule ports are directly connected.

A device for chip integration is also provided, including: an inputting module, an obtaining module, a connecting module, and an integrating module, in which:
the inputting module is configured to input the parameter file information of the parameter file required to be searched;
   the obtaining module is configured to obtain the submodule port list according to the parameter file information input by the inputting module;
   the connecting module is configured to perform the connection between the module ports and/or the submodule ports according to the submodule port list obtained by the obtaining module and the preconfigured connection table;
   the integrating module is configured to generate the top level file according to the connection between the module ports and/or the submodule ports, so as to implement the chip integration.

In an embodiment, the obtaining module is particularly configured to, according to the parameter file name and the parameter file directory in the parameter file information, search the required parameter file in the preconfigured and stored configuration file, and extract the submodule code from the searched parameter file, so as to obtain the submodule port list.

In an embodiment, the connecting module is particularly configured to obtain the module port list from the preconfigured connection table, and perform, according to the obtained module port list and the obtained submodule port list, the connection between the module ports, the connection between the submodule ports and the connection between the module ports and the submodule ports.

In an embodiment, the module port list includes: the input/output types and bit widths of the module ports;
the submodule port list includes: the input/output types and bit widths of the submodule ports.

In an embodiment, if the bit widths of the module ports and/or the bit widths of the submodule ports do not match, when the connection between the module ports and/or the submodule ports is performed, only the low data bits are connected, and the high data bits are connected to zero;
if the bit widths of the module ports and/or the bit widths of the submodule ports match, the module ports and/or the submodule ports are directly connected.

A computer storage medium is also provided, which stores computer programs configured for executing the method for chip integration.

According to the method and device for chip integration, and the storage medium provided by the embodiments of the disclosure, first, the parameter file information of the parameter file required to be searched is input, and the submodule port list is obtained according to the input parameter file information; then, the connection between module ports and/or submodule ports is performed according to the obtained submodule port list and the preconfigured connection table; finally, the top level file is generated according to the connection between the module ports and/or the submodule ports, so as to implement the chip integration. In this way, by automatically obtaining the submodule port list and the module port list to perform the connection between the module ports, the connection between the submodule ports and the connection between the module ports and the submodule ports, it is possible to implement fast integration of SoC, shorten the design cycle of SoC, reduce the production cost of SoC, improve the usage efficiency, and thus enhance the market competitiveness.

### BRIEF DESCRIPTION OF THE DRAWINGS

Fig. 1 is a flowchart of a method for chip integration according to an embodiment of the disclosure;
Fig. 2 is a schematic diagram showing a result of adopting the technical solutions according to an embodiment of the disclosure to implement the integration of SoC;
Fig. 3 is a schematic diagram of adopting the technical solutions according to an embodiment of the disclosure to carry out the integration of SoC; and
Fig. 4 is a structure diagram of a device for chip integration according to an embodiment of the disclosure.

### DETAILED DESCRIPTION

In an embodiment of the disclosure, parameter file information of a parameter file required to be searched is input; a submodule port list is obtained according to the input parameter file information; connection between module ports and/or submodule ports is performed according to the obtained submodule port list and a preconfigured connection table; and a top level file is generated according to the connection between the module ports and/or the submodule ports, so as to implement the chip integration.

Specifically, there are three connections between the module ports and/or the submodule ports, namely the connection between the module ports, the connection between the submodule ports, and the connection between the module ports and the submodule ports.

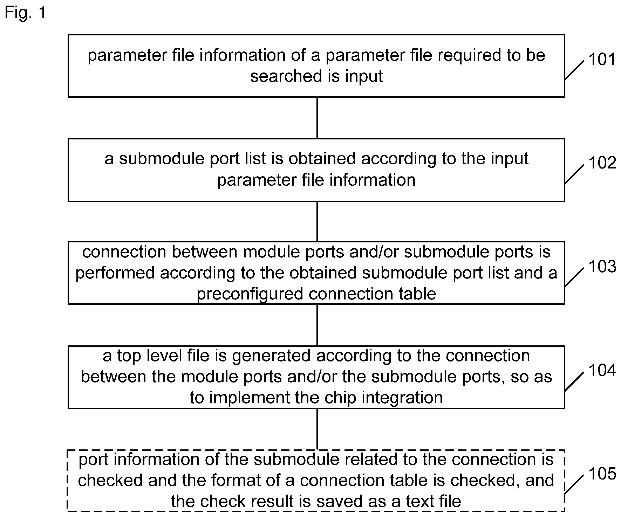

In an embodiment of the disclosure, as shown in Fig. 1, the processing flow of the method for chip integration includes the following steps.

Step 101: parameter file information of a parameter file required to be searched is input;
herein, the parameter file information includes: a name of the parameter file and a directory of the parameter file.

Step 102: a submodule port list is obtained according to the input parameter file information;
specifically, according to the parameter file name and the parameter file directory in the parameter file information, the required parameter file is searched in a preconfigured and stored configuration file, and a submodule code is extracted from the searched parameter file, so as to obtain the submodule port list stored in a submodule;
herein, the parameter file includes: the name of the submodule code, the storage directory of the submodule code, a selected work mode of the chip integration, whether to use an existing connection table, the instantiated name of a submodule, the name of a module, the location from where a file called in the submodule is searched, and the connection mode of an internal bus.

The submodule port list includes: input/output types and bit widths of the submodule ports; the input/output types of the submodule ports include: input, output, and inout; the bit widths of the submodule ports can be defined in the submodule using a parameter, namely Parameter or Define, in the Verilog syntax;
the configuration file includes: a selected work mode of the chip integration, whether to use the existing connection table, the instantiated name of the submodule, the name of the module, and the location from where the file called in the submodule is searched.

Step 103: connection between the module ports and/or the submodule ports is performed according to the obtained submodule port list and the preconfigured connection table;
here, in order to further simplify the integration process of SoC and reduce the error probability in the integration process of SoC, it is possible to obtain the module port list from the preconfigured connection table; the module port list includes: the input/output types and bit widths of the module ports; the input/output types of the module ports include: input, output, and inout;
the connection table is in a format of text file, and includes three parts of contents: the first part is the description of the module port, such as the name of the module port, the input/output type of the module port, and the bit width of the module ports; the second part is the connection between the module and the submodule, such as an output signal path, an input signal path, and a connection name; the third part is initialized signal values of the module port and the submodule port when it is needed to directly assign values to a high level signal or a low level signal;
specifically, the module port list is obtained from the preconfigured connection table, and according to the obtained module port list and the obtained submodule port list, the connection between the module ports, the connection between the submodule ports, and the connection between the module port and the submodule port are performed;
when the connection between the module ports and/or the submodule ports is performed, if the bit widths of the module ports and/or the bit widths of the submodule ports match, the connection between the module ports, the connection between the submodule ports, and the connection between the module port and the submodule port are performed directly; if the bit widths of the module ports and/or the bit widths of the submodule ports do not match, only low data bits are connected, and high data bits are connected to zero;
herein, the connection between the submodule ports means signal connection between the submodule ports; there are three modes of implementing the connection between the submodule ports; based on the actual demands, the connection between the submodule ports can be implemented by using one, two or three of the three modes:
the first mode is that: based on the bus connection mode described in the configuration file, the bus of the module port and the bus of the submodule port are identified and connected according to a specific identifying field that a bus signal has; herein, there are standard buses and non-standard buses; the standard buses include: ACE, AXI, AHB, and APB; for the AHB, APB, and other configuration buses, a one-to-many bus connection mode can be adopted, that is, a group of main buses are interconnected with multiple groups of auxiliary buses;
the second mode is that: based on the connection mode of random signals in the connection table, the connection table is exported by reading the existing top level integration file, and the connection between the submodule ports is performed according to information of the connection table; exporting the connection table is convenient to modify the connection between the submodules and the transfer between items;
the third mode is that: the connection is modified on the existing top level module, and recording or not is selected; herein, recording means that after the integration of SoC, the manually modified connection information will be added to the connection table; not recording means that after the integration of SoC, the manually modified connection information will not be added to the connection table;
in an embodiment of the disclosure, it is possible to agree that the submodule port is only connected to 0 or 1.

When the connection relationships in the configuration file, the old top level file, and the updated top level file are in conflict with each other, the configuration file has the highest priority, and the updated top level file has the secondary priority.

Step 104: a top level file is generated according to the connection between the module ports and/or the submodule ports, so as to implement the chip integration;
particularly, the generated top level file includes:
(1). change information of the top level file and warnings, for example, added or deleted modules, added or deleted pins, added or deleted present network definitions, and added or deleted module ports;
(2). change information of the connection table and warnings, for example, added or deleted pins, added or deleted port modules, added or deleted module port initializations, input ports not found, definitions of pins declared repeatedly, and related information of the connection table;
(3). the problems found when it is prompted to obtain the submodule port list, for example, the Include file required in a submodule file is not found, the number of 'ifdef' and the number of 'endif' in the submodule do not match, the port declaration and the port list do not match, and other Verilog syntax errors, the same macro definition occurs repeatedly, there are macro definitions and parameter definitions which cannot be processed, and the top level file cannot be processed when being converted into a table.

After Step 104 is performed, the method for chip integration of the disclosure also includes:
Step 105: port information of the submodule related to the connection is checked, the format of a connection table is checked, and the check result is saved as a text file.

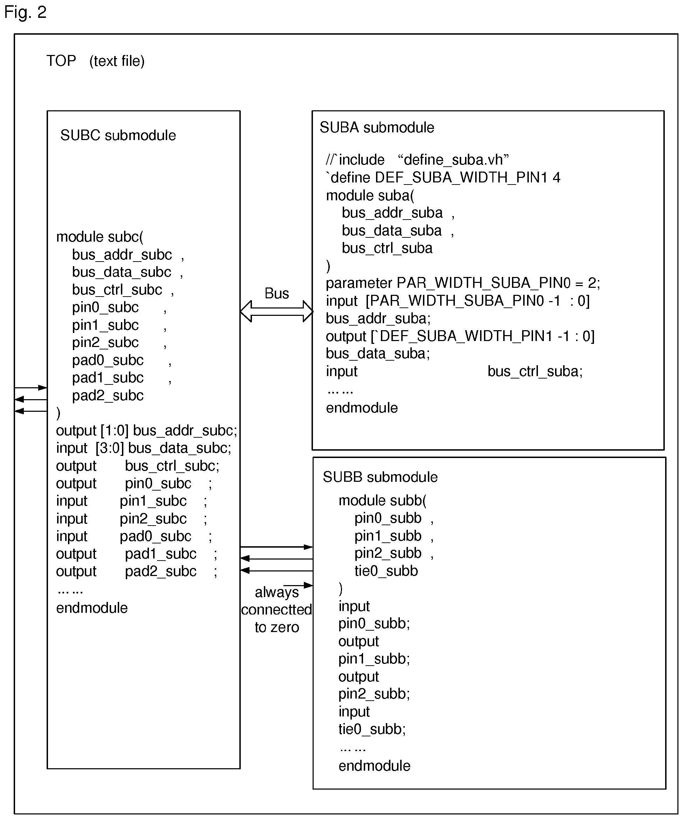

Fig. 2 is a schematic diagram showing a result of adopting the technical solutions according to an embodiment of the disclosure to implement the integration of SoC; as shown in Fig. 2, a text file named TOP is obtained after the module ports are connected; the TOP file needs to instantiate the submodules SUBA, SUBB, and SUBC; the port signal list and the definition of port signal bit width of each submodule are in the submodule file; the name of the text file obtained after the module ports are connected can be flexibly set as needed.

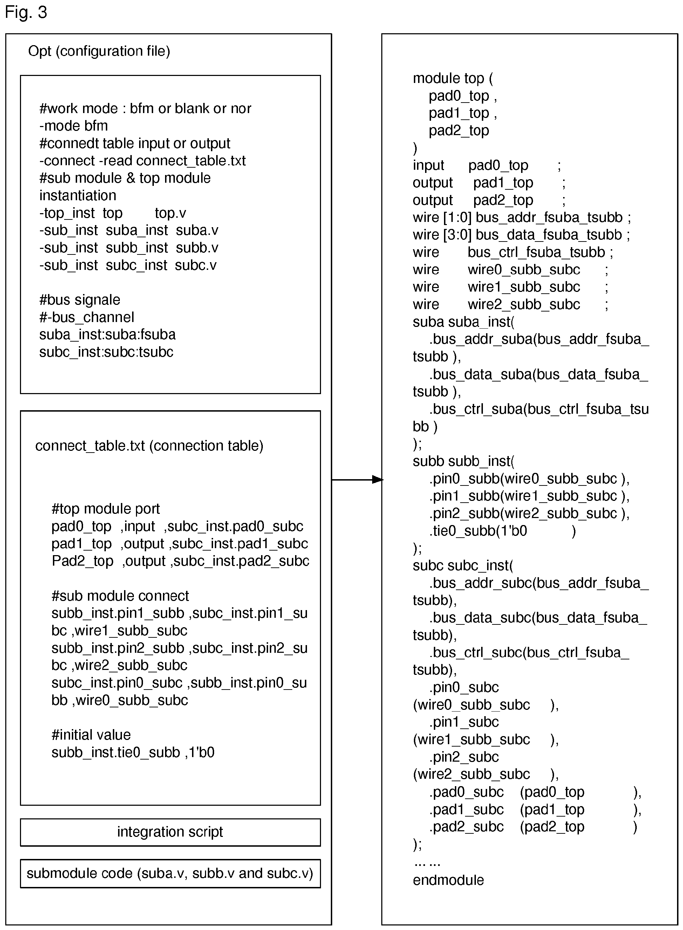

Fig. 3 is a schematic diagram of adopting the technical solutions according to an embodiment of the disclosure to carry out the integration of SoC; as shown in Fig. 3, the automatic integration of SoC is implemented by using the configuration file, the connection table, and the submodule code file.

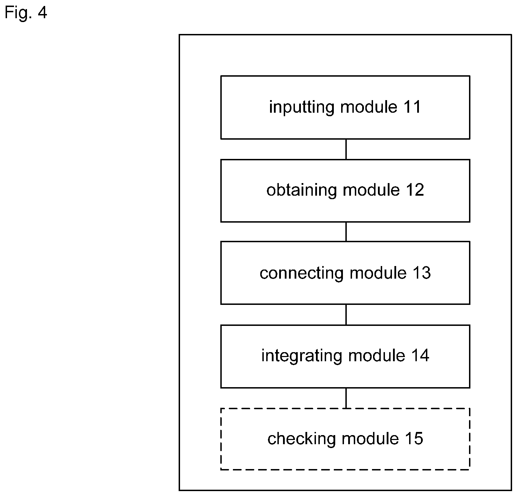

In order to implement the method for chip integration, the disclosure also provides a device for chip integration; as shown in Fig. 4, the structure of the device includes: an inputting module 11, an obtaining module 12, a connecting module 13, and an integrating module 14, in which:
the inputting module 11 is configured to input the parameter file information of the parameter file required to be searched;
the obtaining module 12 is configured to obtain the submodule port list according to the parameter file information input by the inputting module 11;
the connecting module 13 is configured to perform the connection between the module ports and/or the submodule ports according to the submodule port list obtained by the obtaining module 12 and the preconfigured connection table;
the integrating module 14 is configured to generate the top level file according to the connection between the module ports and/or the submodule ports, so as to implement the chip integration.

Furthermore, the obtaining module 12 is particularly configured to, according to the parameter file name and the parameter file directory in the parameter file information, search the required parameter file in the preconfigured and stored configuration file, and extract the submodule code from the searched parameter file, so as to obtain the submodule port list.

Furthermore, the connecting module 13 is particularly configured to obtain the module port list from the preconfigured connection table, and perform, according to the obtained module port list and the obtained submodule port list, the connection between the module ports, the connection between the submodule ports and the connection between the module ports and the submodule ports.

Furthermore, the module port list includes: the input/output types and bit widths of the module ports; the submodule port list includes: the input/output types and bit widths of the submodule ports.

Furthermore, if the bit widths of the module ports and/or the bit widths of the submodule ports do not match, when the connecting module performs the connection between the module ports and/or the submodule ports, only the low data bits are connected, and the high data bits are connected to zero;
if the bit widths of the module ports and/or the bit widths of the submodule ports match, the module ports and/or the submodule ports are directly connected.

The device for chip integration of the disclosure also includes: a checking module 15, which is configured to check the port information of the submodule related to the connection and the format of the connection table, and save the check result as a text file.

All of the inputting module, the obtaining module, the connecting module, and the integrating module of the device for chip integration provided according to embodiments of the disclosure can be implemented by means of processors; certainly, they can also be implemented by means of specific logic circuits; herein, the processors can be processors on the device for chip integration; in practical applications, the processors can be a Central Processing Unit (CPU), a Micro Processing Unit (MPU), a Digital Signal Processor (DSP), or a Field Programmable Gate Array (FPGA).

In the embodiments of the disclosure, if the method for chip integration is implemented by software function modules, and the software function modules are sold or used as independent products, the software function modules can also be stored in a computer readable storage medium. Based on this understanding, the technical solutions according to the embodiments of the disclosure substantially or the part making a contribution to the traditional art can be embodied in the form of software product; the computer software product is stored in a storage medium and includes a number of instructions to make a computer device (which can be a personal computer, a server or a network device) perform all or part of the method in each embodiment of the disclosure. The above storage medium includes: a USB flash disk, a mobile hard disk, a Read Only Memory (ROM), a magnetic disk or a compact disc, and other media which can store program codes. In this way, the disclosure is not limited to any particular combination of hardware and software.

Correspondingly, the disclosure also provides a computer storage medium having stored therein computer programs used for performing the method for chip integration.

The above are only the preferred embodiments of the disclosure and not intended to limit the scope of protection of the disclosure.

## Claims

1. A method for chip integration, comprising:
inputting parameter file information of a parameter file required to be searched;
obtaining a submodule port list according to the input parameter file information;
performing connection between module ports and/or submodule ports according to the obtained submodule port list and a preconfigured connection table; and
generating a top level file according to the connection between the module ports and/or the submodule ports, so as to implement the chip integration.

2. The method for chip integration according to claim 1, wherein obtaining the submodule port list according to the input parameter file information comprises:
according to a parameter file name and a parameter file directory in the parameter file information, searching the required parameter file in a preconfigured and stored configuration file, and extracting a submodule code from the searched parameter file, so as to obtain the submodule port list.

3. The method for chip integration according to claim 1, wherein performing the connection between the module ports and/or the submodule ports according to the obtained submodule port list and the preconfigured connection table comprises:
obtaining a module port list from the preconfigured connection table, and performing, according to the obtained module port list and the obtained submodule port list, the connection between the module ports, the connection between the submodule ports and the connection between the module ports and the submodule ports.

4. The method for chip integration according to claim 3, wherein the module port list comprises: input/output types and bit widths of the module ports;
the submodule port list comprises: input/output types and bit widths of the submodule ports.

5. The method for chip integration according to claim 3, wherein if the bit widths of the module ports and/or the bit widths of the submodule ports do not match, when the connection between the module ports and/or the submodule ports is performed, only low data bits are connected, and high data bits are connected to zero;
if the bit widths of the module ports and/or the bit widths of the submodule ports match, the module ports and/or the submodule ports are directly connected.

6. A device for chip integration, comprising: an inputting module, an obtaining module, a connecting module, and an integrating module,
wherein the inputting module is configured to input parameter file information of a parameter file required to be searched;
the obtaining module is configured to obtain a submodule port list according to the parameter file information input by the inputting module;
the connecting module is configured to perform connection between module ports and/or submodule ports according to the submodule port list obtained by the obtaining module and a preconfigured connection table;
the integrating module is configured to generate a top level file according to the connection between the module ports and/or the submodule ports, so as to implement the chip integration.

7. The device for chip integration according to claim 6, wherein the obtaining module is configured to, according to a parameter file name and a parameter file directory in the parameter file information, search the required parameter file in a preconfigured and stored configuration file, and extract a submodule code from the searched parameter file, so as to obtain the submodule port list.

8. The device for chip integration according to claim 6, wherein the connecting module is configured to obtain a module port list from the preconfigured connection table, and perform, according to the obtained module port list and the obtained submodule port list, the connection between the module ports, the connection between the submodule ports and the connection between the module ports and the submodule ports.

9. The device for chip integration according to claim 8, wherein the module port list comprises: input/output types and bit widths of the module ports;
the submodule port list comprises: input/output types and bit widths of the submodule ports.

10. The device for chip integration according to claim 8, wherein if the bit widths of the module ports and/or the bit widths of the submodule ports do not match, when the connection between the module ports and/or the submodule ports is performed, only low data bits are connected, and high data bits are connected to zero;
if the bit widths of the module ports and/or the bit widths of the submodule ports match, the module ports and/or the submodule ports are directly connected.

11. A computer storage medium having stored therein computer executable instructions, configured for executing a method for chip integration according to any one of claims 1 to 5.
